# EUROPÄISCHE PATENTSCHRIFT

(11) **EP 3 844 465 B1**
(45) Veröffentlichungstag und Bekanntmachung des Hinweises auf die Patenterteilung: **02.08.2023**
(21) Anmeldenummer: 19778826.8
(22) Anmeldetag: 12.09.2019
(51) Int. Cl.: G01K 7/16, H02S 50/10, G01K 7/42

(54) **PV-EINRICHTUNG MIT REDUZIERTER ALTERUNG**
PV-DEVICE HAVING REDUCED AGING
DISPOSITIF PHOTOVOLTAÏQUE À VIEILLISSEMENT RÉDUIT

(30) Priorität: 27.09.2018 DE 102018216607
(43) Veröffentlichungstag der Anmeldung: 07.07.2021
(73) Patentinhaber: Siemens Energy Global GmbH & Co. KG, 81739 München (DE)
(72) Erfinder: FLEISCHER, Maximilian, 85635 Höhenkirchen (DE); POHLE, Roland, 85570 Herdweg (DE); SIMON, Elfriede, 80639 München (DE); VON SICARD, Oliver, 81541 München (DE)
(86) Internationale Anmeldenummer: PCT/EP2019/074317
(87) Internationale Veröffentlichungsnummer: WO 2020/064344

(56) Entgegenhaltungen:
- DE-A1- 3 516 876
- DE-A1-102017 205 524
- US-A1- 2011 036 344
- PROSKURYAKOV Y ET AL: "Impedance spectroscopy of unetched CdTe/CdS solar cells-equivalent circuit analysis", JOURNAL OF APPLIED PHYSICS, AMERICAN INSTITUTE OF PHYSICS, US, Bd. 102, Nr. 2, 19. Juli 2007 (2007-07-19) , Seiten 24504-24504, XP012101315, ISSN: 0021-8979, DOI: 10.1063/1.2757011
- Bag Monojit ET AL: "Kinetics of Ion Transport in Perovskite Active Layers and it Implications for Active Layer Stability", , 1 October 2015 (2015-10-01), XP055852356, Retrieved from the Internet: URL:https://www.researchgate.net/profile/M -Bag/publication/282572233_SI-jacs_081115- MB/links/56125c9e08ae4833751c0937/SI-jacs- 081115-MB.pdf [retrieved on 2021-10-18]

## Beschreibung

Die Erfindung betrifft eine Photovoltaikeinrichtung mit einer Perowskit-PV-Zelle und insbesondere die Alterung einer solchen Perowskit-PV-Zelle.

Solare Stromerzeugung mit den Mitteln der Photovoltaik (PV) trägt aus umweltpolitischen und zunehmend auch wirtschaftlichen Gründen bspw. in Mitteleuropa einen stark steigenden Anteil zur Elektrizitätsproduktion bei. Weltweit ist bereits eine große Anzahl von PV-Anlagen installiert, die vorwiegend auf konventionellen Ansätzen mit siliziumbasierten PV-Zellen aufbauen, bei denen die lichtsensitive Komponente der PV-Zelle, welche bei Bestrahlung mit Licht L eine elektrische Spannung U1 bereitstellt, welche also das auf die PV-Zelle fallende Licht L in eine elektrische Ausgangsspannung U1 wandelt, im Wesentlichen aus Silizium besteht. Seit einigen Jahren werden jedoch sog. perowskitische Materialien wie z.B. CH3NH3PbI3 (oder allgemeiner (CH3NH3)MX3-xYx (mit M=Pb oder Sn sowie X,Y=I, Br oder Cl)) hinsichtlich des Einsatzes in PV-Zellen untersucht, die aufgrund ihrer optoelektronischen Eigenschaften eine hocheffiziente Umwandlung von elektromagnetischer Strahlungsenergie in elektrische Energie erlauben. Perowskitbasierte PV-Zellen, d.h. PV-Zellen, deren lichtsensitive Komponente im Wesentlichen aus einem perowskitischen Material bestehen, zeichnen sich zum Einen dadurch aus, dass sie vergleichsweise kostengünstig sind. Zum Anderen stellen die Perowskit-PV-Zellen eine ernstzunehmende Alternative zu den herkömmlichen siliziumbasierten PV-Zellen dar, weil sich aufgrund der in den letzten Jahren erzielten Fortschritte hinsichtlich Ihres durch die sogenannte "photo conversion efficiency" (PCE) beeinflussten Wirkungsgrades von einigen wenigen Prozent auf heutzutage über 20% andeutet, dass Wirkungsgrade bzw. Effizienzen erreichbar sind, die diejenigen der herkömmlichen PV-Zellen signifikant übertreffen. Dabei ist es denkbar, eine Perowskit-PV-Zelle allein oder aber in einem Tandem-PV-Modul bspw. in Kombination mit einer herkömmlichen Silizium-PV-Zelle zu betreiben. Letzteres wird bspw. in der PCT/EP2018/055499 beschrieben. DE 10 2017 205 524 A1 offenbart ebenfalls eine Perowskit-PV-Zelle in einem Tandem-PV-Modul, bei dem die Temperatur der Zellen mithilfe eines Temperatursensors gemessen wird. DE 35 16 876 A1 offenbart eine PV-Zelle, bei der die innere Temperatur der Zelle aus einer Messung der Leerlaufspannung abgeleitet wird. US 2011/036344 A1 offenbart eine PV-Anlage mit PV-Zellen, deren Temperatur mithilfe eines Sensors überwacht wird. Wenn die gemessene Temperatur einen vorbestimmten Schwellwert überschreitet, werden die Betriebsbedingungen der PV-Zelle dahingehend angepasst, dass die innere Temperatur der PV-Zelle sinkt. Proskuryakov et al. 2007: "Impedance spectroscopy of unetched CdTe/CdS solar cells-equivalent circuit analysis" offenbart eine Untersuchung bestimmter Eigenschaften von Solarzellen mithilfe von Impedanzspektroskopie bei verschiedenen Temperaturen. Bag et al. 2015: "Kinetics of Ion Transport in Perovskite Active Layers and its Implications for Active Layer Stability" offenbart eine Untersuchung der Temperaturabhängigkeit verschiedener elektrischer Parameter, so z.B. der Impedanz und der Leitfähigkeit, von Perowskit-PV-Zellen.

Trotz der vielversprechenden Entwicklung unterliegen die Perowskit-PV-Zellen jedoch dem Problem, dass ihre Effizienz bzw. ihr Wirkungsgrad nicht konstant ist. Insbesondere wurde in diesem Zusammenhang festgestellt, dass die Effizienz einer Perowskit-PV-Zelle aufgrund ihrer typischerweise mangelnden thermischen Stabilität sensibel auf hohe Temperaturen reagiert, dass also, mit anderen Worten, die Effizienz einer Perowskit-PV-Zelle mit steigender Temperatur abnimmt. Die mangelnde thermische Stabilität wirkt sich jedoch nicht nur kurzfristig auf die Perowskit-PV-Zelle aus. Die Temperaturbelastungen bewirken des Weiteren eine beschleunigte Alterung der Perowskit-PV-Zelle, was sich bspw. darin äußern kann, dass es zu einer Zersetzung des der lichtsensitiven Komponente zu Grunde liegenden perowskitischen Materials sowie zu Ionenwanderung und/oder zur Bildung von Defekten in der lichtsensitiven Komponente kommen kann. Jeder dieser Effekte beeinflusst die optoelektronischen Eigenschaften des Materials der lichtsensitiven Komponente auf negative Art und Weise, so dass sich die die PV-Zelle auszeichnenden Parameter wie bspw. die Leerlaufspannung, die Kurzschlussstromstärke sowie letztlich die Effizienz, für die bspw. die sogenannte "photon conversion efficiency" (PCE) eine Maßzahl ist, mittel- bis langfristig verschlechtern.

Es ist daher eine Aufgabe der vorliegenden Erfindung, die mittel- und langfristige Alterung der Perowskit-PV-Zelle zu reduzieren.

Diese Aufgabe wird durch die in Anspruch 1 beschriebenen PV-Einrichtung und das in Anspruch 8 beschriebene Betriebsverfahren gelöst. Die Unteransprüche beschreiben vorteilhafte Ausgestaltungen.

Die PV-Einrichtung weist eine Perowskit-PV-Zelle zum Umwandeln von auf die Perowskit-PV-Zelle fallendem Licht L in eine elektrische Ausgangsspannung U1 auf, welche an elektrischen Anschlüssen der Perowskit-PV-Zelle abgreifbar ist, sowie einer Anordnung zur Überwachung der momentanen inneren Temperatur T(t1) der Perowskit-PV-Zelle und zur Einleitung einer entsprechenden Maßnahme zur Senkung der inneren Temperatur, falls diese den Temperaturschwellwert TS übersteigt. Vor diesem Hintergrund ist die Anordnung eingerichtet, ein Maß für die innere Temperatur T der Perowskit-PV-Zelle zu ermitteln, und dafür zumindest in einem Messzustand der PV-Einrichtung einen elektrischen Parameter PARAM der Perowskit-PV-Zelle zu messen und aus dem gemessenen Parameter PARAM(t1) das Maß für die momentane innere Temperatur T(t1) der Perowskit-PV-Zelle zu ermitteln.

Erfindungsgemäß ist die Anordnung eingerichtet, das ermittelte Maß für die momentane innere Temperatur T der Perowskit-PV-Zelle mit einem Schwellwert TS zu vergleichen und für den bestimmten Fall, dass das ermittelte Maß für die momentane innere Temperatur T den Schwellwert TS übertrifft, Betriebsbedingungen der Perowskit-PV-Zelle dahingehend anzupassen, dass die innere Temperatur sinkt. So wird verhindert, dass es aufgrund von übermäßigen inneren Temperaturen der Perowskit-PV-Zelle zu einer Beschädigung und/oder zu einer vorzeitigen oder beschleunigten Alterung der Perowskit-PV-Zelle kommt.

In einem Verfahren zum Betreiben einer solchen PV-Einrichtung mit dem letztendlichen Ziel des Verlangsamens einer Alterung der Perowskit-PV-Zelle der PV-Einrichtung wird also im Messzustand der PV-Einrichtung der elektrische Parameter der Perowskit-PV-Zelle gemessen und aus dem gemessenen Parameter das Maß für die momentane innere Temperatur der Perowskit-PV-Zelle ermittelt.

Die hier und im Folgenden verwendete Formulierung, dass ein "Maß" für die innere Temperatur ermittelt werden soll, beinhaltet natürlich die Spezialität, dass nicht nur das Maß für die Temperatur sondern tatsächlich die Temperatur selbst ermittelt wird. Für die hier vorgesehene Anwendung ist es faktisch nicht zwingend notwendig, dass eine absolute Temperatur vorliegt, da es, wie im Folgenden noch beschrieben wird, auf den Vergleich mit einem Schwellwert TS ankommt. Vorausgesetzt, dass dieser Schwellwert TS ebenfalls entsprechend dimensioniert bzw. skaliert ist, reicht es aus, lediglich auf ein Maß für die innere Temperatur zurückgreifen zu können.

Um auch mittel- und langfristig einen hocheffizienten Betrieb der Perowskit-PV-Zelle sicherstellen zu können, müssen die genannten, die Alterung beeinflussenden Parameter überwacht und so weit wie möglich vermieden werden. Hierbei wird insbesondere die innere Temperatur der Perowskit-PV-Zelle ins Auge gefasst, d.h. die Temperatur im Inneren der Perowskit-PV-Zelle, bspw. diejenige der lichtsensitiven Komponente. Die innere Temperatur hat erheblichen Einfluss auf die Performance und die Langzeitstabilität von perowskitbasierten PV-Zellen. Es ist jedoch mit gängigen Mitteln bislang nicht möglich, die innere Temperatur direkt zu messen, da keine PV-Zellen mit integrierten Temperatursensoren verfügbar sind.

Es wird daher das Konzept verfolgt, den Effekt der Temperatur auf bestimmte elektrische Parameter der Perowskit-PV-Zelle zu nutzen, um auf die Temperatur zurück zu schließen. Die bestimmten elektrischen Parameter und deren Veränderung werden als ein Maß für die momentane innere Temperatur der Perowskit-PV-Zelle angenommen. Der dem Konzept zu Grunde liegende Ansatz liegt darin, dass die Überwachung sowie die entsprechende Steuerung bzw. Regelung der PV-Zelle mit dem Ziel, die Degradierung der Perowskit-PV-Zelle zu reduzieren, realisierbar ist, ohne die PV-Zelle selbst physisch verändern zu müssen.

Das Betriebsverfahren sieht dementsprechend vor, dass das ermittelte Maß für die momentane innere Temperatur T der Perowskit-PV-Zelle mit einem Schwellwert TS verglichen wird und dass für den bestimmten Fall, dass das ermittelte Maß für die momentane innere Temperatur T den Schwellwert TS übertrifft, Betriebsbedingungen der Perowskit-PV-Zelle dahingehend angepasst werden, dass die innere Temperatur sinkt. Im bestimmten Fall wird durch Anpassung des Eingangswiderstandes einer Leistungselektronik der PV-Einrichtung ein sich bei einer Ausgangsspannung U1 der Perowskit-PV-Zelle ergebender Strom I1 reduziert wird.

Bspw. kann die gemessene Größe PARAM, die ohne entsprechende Umrechnung noch keine Temperatur darstellt, sondern nur ein Maß für die Temperatur ist, mit einem Schwellwert TS verglichen werden, für den das gleiche gilt, der also keine echte Temperatur repräsentiert, sondern lediglich ein Maß dafür ist.

Die Anordnung ist des Weiteren eingerichtet, eine Leistungselektronik der PV-Einrichtung, die zumindest in einem normalen Betriebszustand der PV-Einrichtung die durch die Perowskit-PV-Zelle bei Beleuchtung mit Licht L bereit gestellte elektrische Ausgangsspannung U1 in eine an einem Ausgang A der Leistungselektronik abgreifbare Ausgangsspannung U2 umwandelt, derart zu betreiben, dass im bestimmten Fall durch Anpassung eines Eingangswiderstandes der Leistungselektronik der PV-Einrichtung ein sich bei einer Ausgangsspannung U1 der Perowskit-PV-Zelle ergebender elektrischer Strom I1 reduziert wird.

Aufgrund des reduzierten Stroms kommt es zu geringeren ohmschen Verlusten und damit zu einer geringeren Wärmeentwicklung. Mittel- und langfristig gesehen bewirkt dies, dass die Perowskit-PV-Zelle langsamer altert.

Die Anordnung zur Ermittlung des Maßes für die momentane innere Temperatur T der Perowskit-PV-Zelle umfasst eine elektrische Energiequelle und eine Kontrolleinheit der PV-Einrichtung, welche grundsätzlich zum Betreiben der PV-Einrichtung vorgesehen ist und welche in diesem Rahmen auch die Energiequelle betreiben kann. Die Kontrolleinheit ist eingerichtet, die Energiequelle im Messzustand derart zu betreiben, dass zur Messung des elektrischen Parameters PARAM über die elektrischen Anschlüsse der Perowskit-PV-Zelle und gespeist aus der elektrischen Energiequelle eine vorgebbare elektrische Spannung an der Perowskit-PV-Zelle und insbesondere an deren lichtsensitiver Komponente anliegt, eine Rückantwort I1 der Perowskit-PV-Zelle auf die angelegte Spannung zu messen und aus der Rückantwort I1 in Verbindung mit der angelegten Spannung den elektrischen Parameter PARAM zu bestimmen, so dass auf das Maß für die innere Temperatur geschlossen werden kann.

Die elektrische Energiequelle ist dabei idealerweise eine bereits ohnehin in der Leistungselektronik vorgesehene Energiequelle, bspw. eine Batterie oder ein Kondensator.

In diesem Fall umfasst die Anordnung zur Ermittlung des Maßes für die momentane innere Temperatur der Perowskit-PV-Zelle umfasst die bereits genannte Leistungselektronik der PV-Einrichtung sowie die Kontrolleinheit der PV-Einrichtung, welche auch eingerichtet ist, die Leistungselektronik zu betreiben. Die Kontrolleinheit ist insbesondere eingerichtet, die Leistungselektronik im Messzustand derart zu betreiben, dass die Leistungselektronik zur Messung des elektrischen Parameters über die elektrischen Anschlüsse der Perowskit-PV-Zelle und gespeist aus der in der Leistungselektronik integrierten elektrischen Energiequelle eine vorgebbare elektrische Spannung an die Perowskit-PV-Zelle und insbesondere an deren lichtsensitive Komponente anlegt, eine Rückantwort I1 der Perowskit-PV-Zelle auf die angelegte Spannung messbar ist und aus der Rückantwort I1 in Verbindung mit der angelegten Spannung der elektrische Parameter PARAM bestimmbar und damit auf das Maß für die innere Temperatur schließbar ist.

Das Betriebsverfahren sieht also vor, dass zur Messung des elektrischen Parameters PARAM eine vorgebbare elektrische Spannung an die Perowskit-PV-Zelle und insbesondere an deren lichtsensitiver Komponente angelegt wird, eine Rückantwort I1 der Perowskit-PV-Zelle auf die angelegte Spannung gemessen wird und aus der Rückantwort I1 in Verbindung mit der angelegten Spannung der elektrische Parameter PARAM bestimmt wird und damit auf das Maß für die innere Temperatur geschlossen werden kann. Die elektrische Energiequelle ist dabei idealerweise eine bereits ohnehin in der Leistungselektronik vorgesehene Energiequelle, bspw. eine Batterie oder ein Kondensator, d.h. die Leistungselektronik ist die die oben genannten Schritte ausführende Komponente.

Die Überwachung der inneren Temperatur kann also mit Hilfe der ohnehin vorhandenen Komponenten der PV-Einrichtung ausgeführt werden.

Der elektrische Parameter kann bspw. eine Impedanz der Perowskit-PV-Zelle oder ein mit Hilfe der Methode der Cyclovoltammetrie ermittelbares Cyclovoltammogramm sein, im letzteren Fall insbesondere ein Peak des gemessenen Cyclovoltammogramms.

Das gesuchte Maß für die momentane innere Temperatur und hier nun insbesondere die momentane innere Temperatur selbst kann aus dem gemessenen elektrischen Parameter, d.h. aus der Impedanz und/oder aus dem Cyclovoltammogramm, modellbasiert bestimmt werden. Das zugrunde liegende Modell, welches den Zusammenhang zwischen gemessenem Parameter und zugehöriger innerer Temperatur beschreibt, ist idealerweise spezifisch für die individuelle Perowskit-PV-Zelle, d.h. für verschiedene Perowskit-PV-Zellen können ggf. unterschiedliche Modelle gelten. Dabei ist jedoch anzunehmen, dass die Modelle bei vergleichbaren Perowskit-PV-Zellen durchaus ähnlich zueinander sind. Dementsprechend könnte der Praktikabilität wegen für Perowskit-PV-Zellen der gleichen Baureihe bzw. mit gleichen technischen Daten ein und dasselbe Modell verwendet werden.

Alternativ kann auch vorgesehen sein, das Maß für die momentane innere Temperatur aus dem gemessenen elektrischen Parameter anhand einer der Perowskit-PV-Zelle zugeordneten Look-Up-Tabelle zu bestimmen.

Durch die Überwachung der momentanen inneren Temperatur bzw. eines Maßes für die innere Temperatur der Perowskit-PV-Zelle kann ggf. durch Einleiten entsprechender Maßnahmen ein Überhitzen der Perowskit-PV-Zelle und damit eine beschleunigte Alterung vermieden werden. Die Überwachung der Temperatur und/oder das Ausführen der Maßnahmen kann vorteilhafterweise durch die ohnehin vorhandene Leistungselektronik in Verbindung mit der Kontrolleinheit der PV-Einrichtung ausgeführt werden, so dass keine zusätzlichen Komponenten installiert werden müssen.

Weitere Vorteile und Ausführungsformen ergeben sich aus den Zeichnungen und der entsprechenden Beschreibung.

Hinsichtlich der Ausdrücke "zum Betreiben der PV-Einrichtung" bzw. "dass die Kontrolleinheit eingerichtet ist, die PV-Einrichtung derart zu betreiben" etc., d.h. Ausdrücke, in denen die Kontrolleinheit die PV-Einrichtung bzw. eine ihrer Komponenten "betreiben" soll, sei angemerkt, dass das jeweilige Betreiben je nach Situation und Bedarf ein Regeln oder ein Steuern der jeweils betriebenen Komponente ist. Es wird davon ausgegangen, dass einem Fachmann je nach Situation und Bedarf klar sein wird, ob die Kontrolleinheit in der jeweiligen Situation steuert oder regelt.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Des Weiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: eine Perowskit-PV-Zelle,
- FIG 2: eine PV-Einrichtung.

Zur Begriffsklärung sei vorweg angemerkt, dass sich Begriffe wie "oben", "unten", "über", "auf", "unter" etc. im jeweiligen Zusammenhang auf ein Koordinatensystem beziehen, bei dem sich die Quelle des durch die PV-Zelle in elektrische Spannung umzuwandelnden Lichts, d.h. bspw. die Sonne, "oben" bzw. "über" der PV-Zelle befindet.

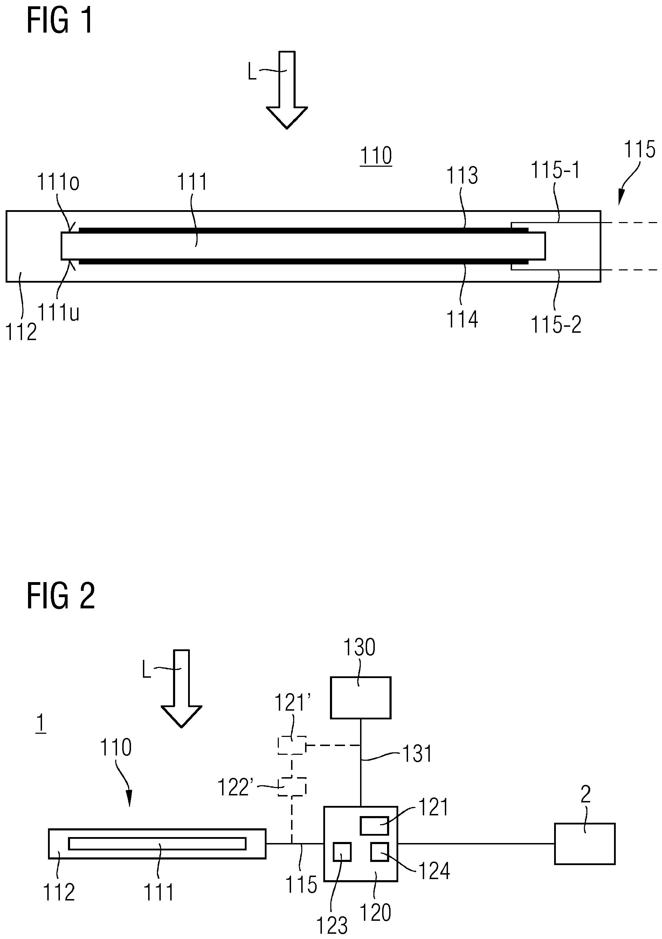

Die FIG 1 zeigt exemplarisch und vereinfacht eine PV-Zelle 110. Die PV-Zelle 110 weist eine lichtsensitive Komponente 111 auf, welche in einem Träger 112, bspw. Glas, eingebettet ist. Die lichtsensitive Komponente 111, welche bei Bestrahlung mit Licht L eine elektrische Spannung U1 bereitstellt, welche also das auf die PV-Zelle 110 fallende Licht L in eine elektrische Ausgangsspannung U1 wandelt, besteht im Wesentlichen aus einem perowskitischen Material wie es eingangs beschrieben wurde, weswegen die PV-Zelle 110 im Folgenden auch als "Perowskit-PV-Zelle" bezeichnet wird. In der Praxis besteht die lichtsensitive Komponente 111 aus mehreren Schichten, was jedoch im hier diskutierten Zusammenhang keine wesentliche Rolle spielt und dementsprechend nicht näher erläutert wird. Die generelle Arbeitsweise einer PV-Zelle 110 und insbesondere diejenige einer lichtsensitiven Komponente 111 sind des Weiteren ausreichend bekannt und werden daher im Folgenden ebenfalls nicht näher erläutert. Es wird lediglich erwähnt, dass die in der lichtsensitiven Komponente 111 aufgrund der Bestrahlung mit Licht L generierte elektrische Ausgangsspannung U1 an Elektroden 113, 114 der PV-Zelle abgegriffen werden kann. Die Elektroden 113, 114 erstrecken sich in der Praxis typischerweise über die gesamte obere bzw. untere Oberfläche 111o, 111u der lichtsensitiven Komponente 111. Dabei ist die Elektrode 113 an der dem Licht L bzw. der entsprechenden, nicht eigens dargestellten Lichtquelle zugewandten Oberfläche 111o der lichtsensitiven Komponente 111 zumindest transparent für denjenigen Teil des Spektrums des Lichts L, für den die lichtsensitive Komponente 111 ihre Maximaleffizienz aufweist. Dieses somit teiltransparente Material kann bspw. mit Li-TFSI dotiertes Spiro-OMeTAD sein. Die Elektrode 114 an der unteren Oberfläche 111u der lichtsensitiven Komponente 111 muss dagegen nicht transparent sein und kann bspw. aus Gold bestehen. Die Perowskit-PV-Zelle 110 weist des Weiteren eine elektrische Verbindung 115 mit Leitungen 115-1, 115-2 auf, mit der sie, wie in der FIG 2 angedeutet, mit einer Leistungselektronik 120 verbindbar ist, um der Leistungselektronik 120 die bei Beleuchtung generierte Spannung U1 zur Verfügung zu stellen. Die Leistungselektronik 120 ist typischerweise als Wechselrichter ausgebildet, der die von der Perowskit-PV-Zelle 110 bereit gestellte Gleichspannung U1 in eine für einen Verbraucher 2 geeignete, an einem Ausgang 124 der Leistungselektronik bereit gestellte Wechselspannung U2 wandelt.

Die FIG 2 zeigt exemplarisch und vereinfacht eine PV-Einrichtung 1 mit einer Perowskit-PV-Zelle 110 wie in der FIG 1 erläutert sowie mit der bereits erwähnten Leistungselektronik 120. Die PV-Einrichtung 1 umfasst des Weiteren eine Kontrolleinheit 130, welche eingerichtet ist, die PV-Einrichtung 1 je nach gewünschter bzw. benötigter Betriebsart zu betreiben. Dabei können als Betriebsarten bspw. ein Normalbetrieb, in dem die Perowskit-PV-Zelle 110 aufgrund der Beleuchtung mit Licht L die Ausgangsspannung U1 bereitstellt, sowie ein Messzustand vorgesehen sein, in dem wie im Folgenden beschrieben die momentane innere Temperatur T der Perowskit-PV-Zelle 110 gemessen wird. Dabei wird insbesondere zum Kontrollieren des Betriebs der Perowskit-PV-Zelle 110 als Teil der PV-Einrichtung 1 faktisch die Leistungselektronik 120 geregelt bzw. ggf. gesteuert, die zum Einen über eine Datenverbindung 131 mit der Kontrolleinheit 130 verbunden ist. Zum Anderen ist die Leistungselektronik 120 der PV-Zelle 110 zugeordnet, und die von der Perowskit-PV-Zelle 110 bei Beleuchtung mit Licht L generierte elektrische Spannung U1 wird der Leistungselektronik 120 über die elektrische Leitung 115 zugeführt.

Im Normalbetrieb der PV-Einrichtung 1 wird die Perowskit-PV-Zelle 110 und insbesondere deren lichtsensitive Komponente 111 mit Licht L beleuchtet und generiert die Ausgangsspannung U1. Diese wird der Leistungselektronik 120 zugeführt und dort je nach Bedarf und betrieben durch die Kontrolleinheit 130 in eine elektrische Spannung U2 gewandelt, die schließlich dem elektrischen Verbraucher 2 zur Verfügung gestellt wird.

Im Normalbetrieb der PV-Einrichtung 1 kann es, wie einleitend erwähnt, zu wesentlich erhöhten inneren Temperaturen T der Perowskit-PV-Zelle 110 kommen, was sich negativ auf die Alterung der Perowskit-PV-Zelle 110 auswirkt. Um einer solchen Entwicklung vorzugreifen, weist die PV-Einrichtung 1 eine Anordnung 200 zur Überwachung der momentanen, d.h. zu einem bestimmten Zeitpunkt t1, inneren Temperatur T(t1) der Perowskit-PV-Zelle 110 auf. Die Anordnung 200 ist insbesondere eingerichtet, im oben eingeführten Messzustand einen momentanen elektrischen Parameter PARAM(t1) der Perowskit-PV-Zelle 110 zu messen und aus dem gemessenen Parameter PARAM(t1) auf die innere Temperatur T(t1) der Perowskit-PV-Zelle 110 zu schließen. In einer ersten, vorteilhaften Ausbildung ist die Anordnung 200 durch die Kontrolleinheit 130 im Zusammenwirken mit der Leistungselektronik 120 und insbesondere mit einer in die Leistungselektronik 120 integrierten Energiequelle 121 realisiert, kann jedoch in einer alternativen Ausbildung auch mit Hilfe einer separaten Energiequelle 121` realisiert sein.

Der elektrische Parameter PARAM, aus dem die Anordnung 200 auf die innere Temperatur T der Perowskit-PV-Zelle 110 schließt, kann in einem ersten Ansatz die momentane Impedanz IMP(t1) der Perowskit-PV-Zelle 110 und insbesondere diejenige der lichtsensitiven Komponente 111 sein, d.h. PARAM(t1)=IMP(t1). Zur Messung der momentanen Impedanz IMP(t1) wird durch die Leistungselektronik 120 und betrieben durch die Kontrolleinheit 130 über die elektrische Leitung 115 und die Elektroden 113, 114 gespeist aus einer Energiequelle 121 und in an sich bekannter Weise eine elektrische Wechselspannung U_imp an die lichtsensitive Komponente 111 angelegt und der resultierende Strom gemessen, woraus sich letztlich die momentane Impedanz IMP(t1) ermitteln lässt. Die Energiequelle 121, die die elektrische Energie für die anzulegende Spannung U_imp liefert, kann bspw. als Batterie oder Kondensator ausgebildet und in die Leistungselektronik 120 integriert sein. Da das Prinzip einer Impedanzmessung als an sich bekannt vorausgesetzt werden kann, wird es an dieser Stelle nicht weiter erläutert. Es sei lediglich erwähnt, dass die Frequenz der Wechselspannung U_imp im Rahmen der Messung ggf. variiert werden kann, um im Endeffekt ein genaueres Ergebnis zu erzielen, da eine Vielzahl von Impedanzen IMP für verschiedene Frequenzen f bestimmt wird, so dass die Bestimmung der Temperatur T anhand einer Vielzahl von unabhängigen Messwerten IMP(f) erfolgt. Letztlich dient die so ermittelte momentane Impedanz IMP(t1) der Perowskit-PV-Zelle 110 als Maß für die momentane Temperatur der Perowskit-PV-Zelle 110.

Der momentane elektrische Parameter PARAM(t1), aus dem die Anordnung 200 auf die momentane innere Temperatur T(t1) der Perowskit-PV-Zelle 110 schließt, kann in einem zweiten Ansatz anstelle der Impedanz ein mit Hilfe der Methode der Cyclovoltammetrie ermittelbares momentanes Cyclovoltammogramm CYCL(t1) sein, d.h. PARAM(t1)=CYCL(t1), wobei das ermittelte bzw. gemessene Cyclovoltammogramm CYCL(t1) ein Maß für die zu ermittelnde momentane innere Temperatur T(t1) darstellt. Rein exemplarisch sei hier auf "Cyclovoltammetrische Bestimmung redoxaktiver Gase mittels eines Festelektrolytsensors" von M. Schelter et al. verwiesen, veröffentlicht in den Manuskripten des 12. Dresdner Sensor-Symposium 2015, Seiten 239-244, wo eine Abhängigkeit von mittels der Cyclovoltammetrie gemessenen Cyclovoltagrammen von der jeweiligen Temperatur einer Messzelle gezeigt wird. Demnach kann aus einem gemessenen Cyclovoltammogramm auf die jeweils vorliegende Temperatur geschlossen werden. In der Cyclovoltammetrie wird bekannterma-ßen bspw. ein zeitlich im Wesentlichen sägezahnförmiger Spannungsverlauf an ein Elektrodenpaar angelegt. Die Leistungselektronik 120 legt also betrieben durch die Kontrolleinheit 130 über die elektrische Leitung 115 und die Elektroden 113, 114 und gespeist aus der Energiequelle 121 eine sägezahnförmige Spannung U_cycl an die lichtsensitive Komponente 111 an und misst über einen entsprechenden Zeitraum den resultierenden Strom I_cycl, woraus sich letztlich ein sogenanntes Cyclovoltamogramm CYCL(t1) ermitteln lässt, in dem der gemessene Strom I_cycl über der angelegten Spannung U_cycl aufgetragen ist und welchem bspw. derjenige Zeitpunkt t1 zugeordnet werden kann, zu dem die Messung begonnen wurde. Das Cyclovoltamogramm CYCL zeichnet sich dadurch aus, dass es, wie auch die Impedanz IMP, temperaturabhängig ist, so dass aus dem Cyclovoltamogramm CYCL auf die Temperatur T geschlossen werden kann. Ein Cyclovolatmmogramm lässt sich letztlich mit verschiedenen Größen beschreiben, bspw. weist es einen charakteristischen Peak I_cycl_max auf. Der zu messende elektrische Parameter PARAM(t1) kann bspw. durch diesen Peak bzw. insbesondere dessen Höhe realisiert sein, d.h. PARAM(t1)=I_cycl_max.

Sowohl im ersten, auf einer Impedanzmessung beruhenden Ansatz zur Ermittlung von PARAM(t1) als auch im zweiten Ansatz, bei dem der elektrische Parameter PARAM(t1) anhand einer Cyclovoltammetriemessung ermittelt wird, kann die Anordnung 200 derart eingerichtet sein, dass die momentane Temperatur T(t1) aus dem gemessenen, momentanen elektrischen Parameter PARAM(t1)=IMP(t1) bzw. PARAM(t1)=CYCL(t1) modellbasiert bestimmt wird. Das entsprechende zu Grunde liegende Modell M, welches den Zusammenhang zwischen gemessenem Parameter PARAM(t1) und zugehöriger innerer Temperatur T(t1) beschreibt, ist idealerweise spezifisch für die individuelle Perowskit-PV-Zelle 110, d.h. für verschiedene Perowskit-PV-Zellen können ggf. unterschiedliche Modelle M gelten. Dabei ist jedoch anzunehmen, dass die Modelle M bei vergleichbaren Perowskit-PV-Zellen durchaus ähnlich zueinander sind. Dementsprechend könnte der Praktikabilität wegen für Perowskit-PV-Zellen der gleichen Baureihe bzw. mit gleichen technischen Daten ein und dasselbe Modell M verwendet werden. Das Modell M ist demnach eine Funktion, die einem gemessenen Parameter PARAM(t1) eine innere Temperatur T(t1) der Perowskit-PV-Zelle 11 zuordnet, d.h. T(t1)=M(PARAM(t1)). Um eine Eindeutigkeit der Messung zu gewährleisten, sollte ein solches Modell M zumindest im relevanten Messbereich einen streng monotonen Zusammenhang zwischen den betrachteten Größen T und PARAM zeigen.

Alternativ zur modellbasierten Bestimmung der momentanen inneren Temperatur T(t1) der Perowskit-PV-Zelle 110 kann die Anordnung 200 derart arbeiten bzw. derart eingerichtet sein, dass die momentane Temperatur T(t1) aus dem gemessenen elektrischen Parameter PARAM(t1) anhand einer der Perowskit-PV-Zelle 110 zugeordneten Look-Up-Tabelle bestimmet wird. Zur Ermittlung einer solchen Look-Up-Tabelle für die Perowskit-PV-Zelle 110 kann die PV-Zelle 110 bspw., insbesondere im Vorfeld der Installation der Perowskit-PV-Zelle 110, für ausreichend lang angesetzte Zeiträume festen Umgebungsbedingungen ausgesetzt werden, so dass mit ausreichender Sicherheit davon ausgegangen werden kann, dass die innere Temperatur T der bekannten Temperatur der Umgebung der Perowskit-PV-Zelle 110 entspricht. Ein aus einer zu dem entsprechenden Zeitpunkt t0 ausgeführten Messung der Impedanz IMP hervorgehender Impedanzmesswert IMP(t0) bzw. ein entsprechend ermitteltes Cyclovoltammogramm CYCL(t0) kann dann der entsprechenden Temperatur T(t0) zugeordnet werden. Dies wird für eine Vielzahl von Temperaturen ausgeführt und mit den jeweils entsprechenden resultierenden Impedanzmesswerten bzw. Cyclovoltammogrammen wird bspw. eine Look-Up-Tabelle befüllt, die dann im Normalbetrieb der Perowskit-PV-Zelle 110 verwendet werden kann, um von einem gemessenen Impedanzwert IMP(t1) bzw. von einem gemessenen Cyclovoltammogramm CYCL(t1) auf die momentane innere Temperatur T(t1) zu schließen.

Es folgt demnach, dass in beiden Ansätzen zur Messung des momentanen elektrischen Parameters PARAM(t1) aus diesem Parameter PARAM(t1) in der Anordnung 200 und insbesondere durch deren Kontrolleinheit 130 eine momentane innere Temperatur T(t1) abgeleitet werden kann. Die Kontrolleinheit 130 ist u.a. dazu eingerichtet, basierend auf diesen Messungen die innere Temperatur T zu überwachen und ggf. Maßnahmen hinsichtlich einer reduzierten Alterung der Perowskit-PV-Zelle 110 einzuleiten. Die Überwachung kann bspw. dadurch erfolgen, dass die beschriebene Ermittlung der inneren Temperatur T(ti) zu mehreren Zeitpunkten ti mit i=1, 2, 3, ... ausgeführt wird. Die Kontrolleinheit 130 vergleicht die jeweils ermittelte momentane innere Temperatur T(ti) mit einem Temperaturschwellwert TS. Der Temperaturschwellwert TS ist derart gewählt, dass die Perowskit-PV-Zelle 110, solange die momentane innere Temperatur T(ti) unter diesem Schwellwert TS liegt, keine mittel- oder langfristigen Schäden nimmt, dass also die Alterung der Perowskit-PV-Zelle 110 zumindest nicht aufgrund der inneren Temperatur T wesentlich fortschreitet. Dieser Schwellwert TS hängt demnach mit der materialabhängigen Temperatur zusammen, bei der bspw. eine Zersetzung o.ä. des Materials der lichtsensitiven Komponente 111 beginnt. Typischerweise kann diese Temperatur bzw. der Schwellwert TS in einer Größenordnung von etwa TS=120°C liegen. Wie angedeutet variiert dies jedoch durchaus mit dem der lichtsensitiven Komponente 111 zu Grunde liegenden Material.

Die Anordnung 200 und insbesondere die Kontrolleinheit 130 veranlasst für den Fall, dass die momentane innere Temperatur T den Temperaturschwellwert TS überschreitet, dass die Betriebsbedingungen der Perowskit-PV-Zelle 110 dahingehend angepasst werden, dass die innere Temperatur zumindest auf T<TS zurück geht. So wird verhindert, dass es aufgrund von übermäßigen inneren Temperaturen der Perowskit-PV-Zelle 110 zu einer Beschädigung und/oder zu einer vorzeitigen oder beschleunigten Alterung der Perowskit-PV-Zelle 110 kommt.

Die anzupassenden Betriebsbedingungen können bspw. die Betriebsspannung sowie den Betriebsstrom der Perowskit-PV-Zelle 110 umfassen, welche durch die Kontrolleinheit 130 im Zusammenwirken mit der Leistungselektronik 120 derart angepasst werden, dass die erwünschte Temperaturreduzierung aufgrund einer geringeren Wärmeentwicklung in der Perowskit-PV-Zelle 110 erreicht wird. Hierbei werden die Betriebsbedingungen so angepasst, dass bspw. ohmsche Verluste reduziert werden, so dass die geringere Wärmeentwicklung resultiert. Konkret kann bspw. durch entsprechende Anpassung eines Eingangswiderstandes 123 der Leistungselektronik 120 bewirkt werden, dass ein sich bei einer Ausgangsspannung U1 der Perowskit-PV-Zelle 110 ergebender Stromertrag I1 verändert und insbesondere reduziert wird. Dies ergibt auch eine Veränderung des Arbeitspunktes der Perowskit-PV-Zelle 110 auf ihrer charakteristischen Strom-Spannungs-Kennlinie, der zwar ggf. nicht mehr dem optimalen Arbeitspunkt ("Maximum Power Point" bzw. MPP) entspricht, bei dem aber die innere Temperatur T der Perowskit-PV-Zelle 110 aufgrund des vorzugsweise reduzierten Stroms I1 sinkt. Wegen des reduzierten Stroms kommt es zu geringeren ohmschen Verlusten und damit zu einer geringeren Wärmeentwicklung. Mittel- und langfristig gesehen bewirkt dies, dass die Perowskit-PV-Zelle 110 langsamer altert.

In der oben erwähnten ersten Ausbildung ist die Anordnung 200 zur Überwachung der momentanen inneren Temperatur T(t1) der Perowskit-PV-Zelle 110 und zur Einleitung einer entsprechenden Maßnahme zur Senkung der inneren Temperatur, falls diese den Temperaturschwellwert TS übersteigt, durch die Kontrolleinheit 130 im Zusammenwirken mit der Leistungselektronik 120 der PV-Einrichtung 1 und der darin integrierten Energiequelle 121 realisiert. Dabei ist der Ausdruck "integriert" so zu verstehen, dass die Energiequelle 121, die die in den beiden Ansätzen benötigte elektrische Spannung bereitstellt, nicht nur bspw. in einem Gehäuse der Leistungselektronik 120 untergebracht ist. Vielmehr meint "integriert", dass die Energiequelle 121, die in diesem Fall insbesondere als Batterie oder als Kondensator ausgebildet ist, schaltungstechnisch in die Schaltung der Leistungselektronik 120 integriert ist. Besonders vorteilhaft kann die Energiequelle 121 eine in der Schaltung der Leistungselektronik 120 ohnehin vorgesehene Komponente sein. Dies eröffnet auch die Möglichkeit, dass die Energiequelle 121 im Normalbetrieb der PV-Einrichtung 1, d.h. insbesondere, wenn die innere Temperatur T unter dem Temperaturschwellwert TS liegt, durch die bei Bestrahlung mit Licht L von der Perowskit-PV-Zelle 110 bereit gestellte Ausgangsspannung U1 aufgeladen werden kann. Beispiele für derartige Schaltungen mit in die Leistungselektronik integrierten Energiespeichern sind in PCT/EP2015/061129 und PCT/EP2015/061932 gezeigt.

Die Energiequelle 121 kann alternativ zur Integration in die Leistungselektronik 120 auch eine separate, außerhalb und unabhängig von der Leistungselektronik 120 arrangierte Energiequelle 121` sein, bspw. eine Batterie oder auch ein Anschluss an ein öffentliches oder nicht öffentliches Stromnetz. Dies ist in FIG 2 durch die mit gestrichelten Linien angedeutete Energiequelle 121` demonstriert, die bspw. über die elektrische Verbindung 115 und die entsprechenden Elektroden 113, 114 mit der lichtsensitiven Komponente 111 verbunden sein kann. Alternativ könnte die Energiequelle 121` natürlich auch über eine separate, zusätzliche Verbindung mit den Elektroden 113, 114 der lichtsensitiven Komponente 111 verbunden sein. Dies ist jedoch insofern weniger vorteilhaft, als dass in diesem Fall zusätzlicher Aufwand hinsichtlich der entsprechenden Verkabelung und Kontaktierung notwendig würde. Je nach Art der separaten Energiequelle 121` ist ggf. eine Elektronik 122` notwendig, die eine bspw. vom Stromnetz 121' zur Verfügung gestellte elektrische Wechselspannung in die zur Bestimmung von PARAM benötigte Spannung U_imp bzw. U_cycl wandelt. Hier würde die Elektronik 122', die je nach Bedarf bspw. als Gleichrichter, Umrichter oder Wechselrichter ausgebildet sein kann, von der Kontrolleinheit 130 entsprechend betrieben werden.

Die Integration der Energiequelle 121 in die Leistungselektronik 120 bringt jedoch gegenüber der Verwendung einer separaten Energiequelle 121` den wesentlichen Vorteil mit sich, dass die ohnehin vorhandene Datenverbindung 131 zwischen der Kontrolleinheit 130 und der Leistungselektronik 120 genutzt werden kann, um die Energiequelle 121 in der Leistungselektronik 120 direkt derart zu betreiben, dass sie in den bestimmten Situationen die benötigte Spannung U_imp bzw. U_cycl liefert. Besonders vorteilhaft ist die Nutzung einer in der elektronischen Schaltung der Leistungselektronik 120 bereits vorhandenen Energiequelle. Derartige moderne Leistungselektroniken 120 sind häufig mit sogenannten "Leistungsoptimierern" (engl. "power optimizer") verbunden bzw. umfassen diese, welche elektrisch mit dem Wechselrichter 120 gekoppelt sind und eine als Energiequelle einsetzbare Komponente aufweisen bzw. selbst als solche fungieren können. Diese Komponente der elektronischen Schaltung der Leistungselektronik 120 kann in der hier beschriebenen Anwendung als Quelle 121 elektrischer Energie zum Bereitstellen der Vorspannung an den Elektroden 113, 114 verwendet werden, wobei die entsprechend notwendige Steuerung bzw. Regelung seitens der Kontrolleinheit 130 geleistet wird. Im beschriebenen Fall muss die Leistungselektronik 120 somit nicht verändert werden, sondern es wird auf die verfügbare elektronische Schaltung zurück gegriffen.

Unabhängig von der Art der Energiequelle 121, d.h. wie in PCT/EP2015/061129 und PCT/EP2015/061932 integriert in die Leistungselektronik 120 oder realisiert durch einen Leistungsoptimierer, wird in beiden Ansätzen zur Bestimmung des elektrischen Parameters PARAM(t1) ein Maß für die momentane innere Temperatur T(t1) der Perowskit-PV-Zelle 110 ermittelt. Sobald dieses Maß impliziert, dass der vorgegebene Temperaturschwellwert überschritten ist, werden die Betriebsbedingungen der Perowskit-PV-Zelle 110 dahingehend angepasst, dass die innere Temperatur zumindest auf T<TS zurück geht.

### Bezugszeichen

- 1: PV-Einrichtung
- 110: Perowskit-PV-Zelle
- 111: lichtsensitive Komponente
- 111o: obere Oberfläche
- 111u: untere Oberfläche
- 112: Träger
- 113: Elektrode
- 114: Elektrode
- 115: elektrischer Anschluss, Verbindung
- 115-1: elektrische Leitung
- 115-2: elektrische Leitung
- 120: Leistungselektronik
- 121: Energiequelle, Batterie, Kondensator, Supercap
- 121`: Energiequelle, Stromnetz
- 122': Elektronik
- 123: Eingangswiderstand
- 124: Ausgang
- 130: Kontrolleinheit
- 131: Datenverbindung

## Patentansprüche

1. PV-Einrichtung (1) mit
- einer Perowskit-PV-Zelle (110) zum Umwandeln von auf die Perowskit-PV-Zelle (110) fallendem Licht L in eine elektrische Ausgangsspannung U1, sowie
- einer Anordnung (200) zur Ermittlung eines Maßes für eine innere Temperatur T der Perowskit-PV-Zelle (110),
wobei
- die Anordnung (200) eingerichtet ist, zumindest in einem Messzustand der PV-Einrichtung (1) einen elektrischen Parameter PARAM(t1) der Perowskit-PV-Zelle (110) zu messen und aus dem gemessenen Parameter PARAM(t1) das Maß für die momentane innere Temperatur T(t1) der Perowskit-PV-Zelle (110) zu ermitteln, wobei die Anordnung (200) eingerichtet ist, das ermittelte Maß für die momentane innere Temperatur T der Perowskit-PV-Zelle (110) mit einem Schwellwert TS zu vergleichen und für den bestimmten Fall, dass das ermittelte Maß für die momentane innere Temperatur T(t1) den Schwellwert TS übertrifft, Betriebsbedingungen der Perowskit-PV-Zelle (110) dahingehend anzupassen, dass die innere Temperatur T der Perowskit-PV-Zelle (110) sinkt.

2. PV-Einrichtung (1) nach Anspruch 1, **dadurch gekennzeichnet, dass** die Anordnung (200) eingerichtet ist, eine Leistungselektronik (120) der PV-Einrichtung (1), die zumindest in einem normalen Betriebszustand der PV-Einrichtung (1) die durch die Perowskit-PV-Zelle (110) bei Beleuchtung mit Licht L bereit gestellte elektrische Ausgangsspannung U1 in eine an einem Ausgang (124) der Leistungselektronik (120) abgreifbare Ausgangsspannung U2 umwandelt, derart zu betreiben, dass im bestimmten Fall durch Anpassung eines Eingangswiderstandes (123) der Leistungselektronik (120) der PV-Einrichtung (1) ein sich bei einer Ausgangsspannung U1 der Perowskit-PV-Zelle (110) ergebender elektrischer Strom (I1) reduziert wird.

3. PV-Einrichtung (1) nach einem der Ansprüche 1 oder 2, **dadurch gekennzeichnet, dass** die Anordnung (200) zur Ermittlung des Maßes für die momentane innere Temperatur T der Perowskit-PV-Zelle (110) umfasst
- eine elektrische Energiequelle (121, 121') und
- eine Kontrolleinheit (130) zum Betreiben der PV-Einrichtung einschließlich der Energiequelle (121, 121'),
wobei die Kontrolleinheit (130) eingerichtet ist,
- die Energiequelle (121, 121') im Messzustand derart zu betreiben, dass zur Messung des elektrischen Parameters PARAM über einen elektrischen Anschluss (115) der Perowskit-PV-Zelle (110) und gespeist aus der elektrischen Energiequelle (121, 121') eine vorgebbare elektrische Spannung (U_imp, U_cycl) an der Perowskit-PV-Zelle (110) und insbesondere an deren lichtsensitiver Komponente (111) anliegt,
- eine Rückantwort (I1) der Perowskit-PV-Zelle (110) auf die angelegte Spannung (U_imp, U_cycl) zu messen,
- aus der Rückantwort (I1) in Verbindung mit der angelegten Spannung (U_imp, U_cycl) der elektrische Parameter PARAM zu bestimmen.

4. PV-Einrichtung (1) einem der Ansprüche 1 oder 2, **dadurch gekennzeichnet, dass** die Anordnung (200) zur Ermittlung des Maßes für die momentane innere Temperatur T(t1) der Perowskit-PV-Zelle (110) umfasst
- eine Leistungselektronik (120) der PV-Einrichtung (1) und
- eine Kontrolleinheit (130) der PV-Einrichtung (1) zum Betreiben der PV-Einrichtung (1) einschließlich der Leistungselektronik (120),
wobei die Kontrolleinheit (130) eingerichtet ist, die Leistungselektronik (120) im Messzustand derart zu betreiben, dass
- die Leistungselektronik (120) zur Messung des elektrischen Parameters PARAM über einen elektrischen Anschluss (115) der Perowskit-PV-Zelle (110) und gespeist aus einer in der Leistungselektronik (120) integrierten elektrischen Energiequelle (121) eine vorgebbare elektrische Spannung (U_imp, U_cycl) an die Perowskit-PV-Zelle (110) und insbesondere an deren lichtsensitive Komponente (111) anlegt,
- eine Rückantwort (I1) der Perowskit-PV-Zelle auf die angelegte Spannung (U_imp, U_cycl) messbar ist,
- aus der Rückantwort (I1) in Verbindung mit der angelegten Spannung (U_imp, U_cycl) der elektrische Parameter PARAM bestimmbar ist.

5. PV-Einrichtung (1) nach einem der Ansprüche 1 bis 4, **dadurch gekennzeichnet, dass** der elektrische Parameter PARAM eine Impedanz IMP der Perowskit-PV-Zelle (110) ist, wobei die gemessene Impedanz IMP(t1) das Maß für die zu ermittelnde momentane innere Temperatur T(t1) darstellt.

6. PV-Einrichtung (1) nach einem der Ansprüche 1 bis 5, **dadurch gekennzeichnet, dass** der elektrische Parameter PARAM ein mit Hilfe der Methode der Cyclovoltammetrie ermittelbares Cyclovoltammogramm CYCL ist, insbesondere ein Peak I_cycl_max des Cyclovoltammogramms CYCL, wobei das gemessene Cyclovoltammogramm CYCL(t1) das Maß für die zu ermittelnde momentane innere Temperatur T(t1) darstellt.

7. PV-Einrichtung (1) nach einem der Ansprüche 1 bis 6, **dadurch gekennzeichnet, dass** die Anordnung (200) eingerichtet ist, das Maß für die momentane innere Temperatur T(t1) aus dem gemessenen elektrischen Parameter PARAM(t1) modellbasiert zu bestimmen.

8. Verfahren zum Betreiben einer PV-Einrichtung (1) nach Anspruch 1 zum Verlangsamen einer Alterung der Perowskit-PV-Zelle (110) der PV-Einrichtung (1), wobei im Messzustand der PV-Einrichtung (1) der elektrische Parameter PARAM der Perowskit-PV-Zelle (110) gemessen und aus dem gemessenen Parameter PARAM(t1) das Maß für die momentane innere Temperatur T(t1) der Perowskit-PV-Zelle (110) ermittelt wird, wobei das ermittelte Maß für die momentane innere Temperatur T(t1) der Perowskit-PV-Zelle (110) mit einem Schwellwert TS verglichen wird und dass für den bestimmten Fall, dass das ermittelte Maß für die momentane innere Temperatur T(t1) den Schwellwert TS übertrifft, Betriebsbedingungen der Perowskit-PV-Zelle (110) dahingehend angepasst werden, dass die innere Temperatur T sinkt.

9. Verfahren nach Anspruch 8, **dadurch gekennzeichnet, dass** im bestimmten Fall durch Anpassung eines Eingangswiderstandes (123) einer Leistungselektronik (120) der PV-Einrichtung (1) ein sich bei einer Ausgangsspannung U1 der Perowskit-PV-Zelle (110) ergebender Strom (I1) reduziert wird.

10. Verfahren nach einem der Ansprüche 8 oder 9, **dadurch gekennzeichnet, dass** zur Messung des elektrischen Parameters PARAM eine vorgebbare elektrische Spannung (U_imp, U_cycl) an die Perowskit-PV-Zelle (110) und insbesondere an deren lichtsensitiver Komponente (111) angelegt wird, eine Rückantwort (I1) der Perowskit-PV-Zelle auf die angelegte Spannung (U_imp, U_cycl) gemessen wird und aus der Rückantwort (I1) in Verbindung mit der angelegten Spannung (U_imp, U_cycl) der elektrische Parameter PARAM bestimmt wird.

11. Verfahren nach Anspruch 10, **dadurch gekennzeichnet, dass** eine Leistungselektronik (120) der PV-Einrichtung (1) verwendet wird, um die vorgebbare elektrische Spannung (U_imp, U_cycl) an die Perowskit-PV-Zelle (110) anzulegen und/oder um die Rückantwort (I1) der Perowskit-PV-Zelle auf die angelegte Spannung (U_imp, U_cycl) zu messen.

12. Verfahren nach einem der Ansprüche 8 bis 11, **dadurch gekennzeichnet, dass** der elektrische Parameter PARAM eine Impedanz IMP der Perowskit-PV-Zelle (110) oder ein mit Hilfe der Methode der Cyclovoltammetrie ermittelbares Cyclovoltammogramm CYCL ist, insbesondere ein Peak I_cycl_max des Cyclovoltammogramms CYCL.

13. Verfahren nach einem der Ansprüche 8 bis 12, **dadurch gekennzeichnet, dass** das Maß für die momentane innere Temperatur T(t1) aus dem gemessenen elektrischen Parameter PARAM modellbasiert bestimmt wird.

## Claims

1. PV device (1) with
- a perovskite PV cell (110) for converting light L impinging on the perovskite PV cell (110) into an electrical output voltage U1, and
- an arrangement (200) for ascertaining a gauge for an internal temperature T of the perovskite PV cell (110),
wherein
- the arrangement (200) is designed, at least in a measuring state of the PV device (1), to measure an electrical parameter PARAM(t1) of the perovskite PV cell (110) and to ascertain the gauge for the instantaneous internal temperature T(t1) of the perovskite PV cell (110) from the measured parameter PARAM(t1), wherein the arrangement (200) is designed to compare the ascertained gauge for the instantaneous internal temperature T of the perovskite PV cell (110) with a threshold value TS, and, for the specific case in which the ascertained gauge for the instantaneous internal temperature T(t1) exceeds the threshold value TS, to adjust operating conditions of the perovskite PV cell (110) in such a way that the internal temperature T of the perovskite PV cell (110) falls.

2. PV device (1) according to Claim 1, **characterized in that** the arrangement (200) is designed to operate a power electronics unit (120) of the PV device (1), which at least in a normal operating state of the PV device (1) converts the electrical output voltage U1 provided by the perovskite PV cell (110) when impinged upon by light L into an output voltage U2 that can be accessed at an output (124) of the power electronics unit (120), in such a way that in the case concerned here, through adjusting an input resistance (123) of the power electronics unit (120) of the PV device (1), an electrical current (I1) resulting in the presence of an output voltage U1 of the perovskite PV cell (110) is reduced.

3. PV device (1) according to either of Claims 1 and 2, **characterized in that** the arrangement (200) for ascertaining the gauge for the instantaneous internal temperature T of the perovskite PV cell (110) comprises
- an electrical energy source (121, 121') and
- a control unit (130) for operating the PV device, including the energy source (121, 121'),
wherein the control unit (130) is designed
- to operate the energy source (121, 121') in the measuring state in such a way that, to measure the electrical parameter PARAM, a predeterminable electrical voltage (U_imp, U_cycl), powered by the electrical energy source (121, 121'), is present at the perovskite PV cell (110) and in particular at its light-sensitive component (111), across an electrical terminal (115) of the perovskite PV cell (110),
- to measure a response (I1) of the perovskite PV cell (110) to the applied voltage (U_imp, U_cycl),
- to determine the electrical parameter PARAM from the response (I1) in combination with the applied voltage (U_imp, U_cycl).

4. PV device (1) according to either of Claims 1 and 2, **characterized in that** the arrangement (200) for ascertaining the gauge for the instantaneous internal temperature T(t1) of the perovskite PV cell (110) comprises
- a power electronics unit (120) of the PV device (1) and
- a control unit (130) of the PV device (1) for operating the PV device (1), including the power electronics unit (120),
wherein the control unit (130) is designed to operate the power electronics unit (120) in the measuring state in such a way that
- to measure the electrical parameter PARAM, the power electronics unit (120), powered by an electrical energy source (121) integrated into the power electronics unit (120), applies a predeterminable electrical voltage (U_imp, U_cycl) to the perovskite PV cell (110), and in particular to its light-sensitive component (111), across an electrical terminal (115) of the perovskite PV cell (110),
- a response (I1) of the perovskite PV cell to the applied voltage (U_imp, U_cycl) is measurable,
- the electrical parameter PARAM can be determined from the response (I1) in combination with the applied voltage (U_imp, U_cycl).

5. PV device (1) according to one of Claims 1 to 4, **characterized in that** the electrical parameter PARAM is an impedance IMP of the perovskite PV cell (110), wherein the measured impedance IMP(t1) represents the gauge for the instantaneous internal temperature T(t1) that is to be ascertained.

6. PV device (1) according to one of Claims 1 to 5, **characterized in that** the electrical parameter PARAM is a cyclovoltammogram CYCL ascertainable with the aid of the method of cyclovoltammetry, in particular a peak I_cycl_max of the cyclovoltammogram CYCL, wherein the measured cyclovoltammogram CYCL(t1) represents the gauge for the instantaneous internal temperature T(t1) that is to be ascertained.

7. PV device (1) according to one of Claims 1 to 6, **characterized in that** the arrangement (200) is designed to determine the gauge for the instantaneous internal temperature T(t1) on the basis of a model from the measured electrical parameter PARAM(t1).

8. Method for operating a PV device (1) according to Claim 1 for slowing an aging of the perovskite PV cell (110) of the PV device (1), wherein the electrical parameter PARAM of the perovskite PV cell (110) is measured in the measuring state of the PV device (1) and the gauge for the instantaneous internal temperature T(t1) of the perovskite PV cell (110) is ascertained from the measured parameter PARAM(t1), wherein the ascertained gauge for the instantaneous internal temperature T(t1) of the perovskite PV cell (110) is compared with a threshold value TS, and, for the specific case in which the ascertained gauge for the instantaneous internal temperature T(t1) exceeds the threshold value TS, operating conditions of the perovskite PV cell (110) are adjusted in such a way that the internal temperature T falls.

9. Method according to Claim 8, **characterized in that** in the case concerned here, through adjusting an input resistance (123) of a power electronics unit (120) of the PV device (1), a current (I1) resulting in the presence of an output voltage U1 of the perovskite PV cell (110) is reduced.

10. Method according to either of Claims 8 and 9, **characterized in that**, to measure the electrical parameter PARAM, a predeterminable electrical voltage (U_imp, U_cycl) is applied to the perovskite PV cell (110), and in particular to its light-sensitive component (111), a response (I1) of the perovskite PV cell to the applied voltage (U_imp, U_cycl) is measured, and the electrical parameter PARAM is determined from the response (I1) in combination with the applied voltage (U_imp, U_cycl).

11. Method according to Claim 10, **characterized in that** a power electronics unit (120) of the PV device (1) is used in order to apply the predeterminable electrical voltage (U_imp, U_cycl) to the perovskite PV cell (110) and/or to measure the response (I1) of the perovskite PV cell to the applied voltage (U_imp, U_cycl).

12. Method according to one of Claims 8 to 11, **characterized in that** the electrical parameter PARAM is an impedance IMP of the perovskite PV cell (110) or is a cyclovoltammogram CYCL ascertainable with the aid of the method of cyclovoltammetry, in particular a peak I_cycl_max of the cyclovoltammogram CYCL.

13. Method according to one of Claims 8 to 12, **characterized in that** the gauge for the instantaneous internal temperature T(t1) is determined on the basis of a model from the measured electrical parameter PARAM.

## Revendications

1. Dispositif (1) PV comprenant
- une cellule (110) PV à la perovskite de transformation de la lumière L tombant sur la cellule (110) PV à la perovskite en une tension U1 électrique de sortie, ainsi que
- un appareillage (200) de détermination d'une valeur d'une température T intérieure de la cellule (110) PV à la perovskite,
dans lequel
- l'appareillage (200) est agencé pour mesurer, au moins d'un état de mesure du dispositif (1) PV, un paramètre PARAM(t1) électrique de la cellule (110) PV à la perovskite et pour déterminer, à partir du paramètre PARAM(t1) mesuré, la valeur de la température T(t1) intérieure instantanée de la cellule (110) PV à la perovskite, dans lequel l'appareillage (200) est agencé pour comparer la valeur déterminée de la température T intérieure instantanée de la cellule (110) PV à la perovskite à une valeur TS de seuil et pour, dans le cas défini où la valeur déterminée de la température T(t1) intérieure dépasse la valeur TS de seuil, adapter en conséquence des conditions de fonctionnement de la cellule (110) PV à la perovskite, de manière à abaisser la température T intérieure de la cellule (110) PV à la perovskite.

2. Dispositif (1) PV suivant la revendication 1, **caractérisé en ce que** l'appareillage (200) est agencé pour faire fonctionner une électronique (120) de puissance du dispositif (1) PV, qui, au moins dans un état de fonctionnement normal du dispositif (1) PV, transforme la tension U1 électrique de sortie donnée par la cellule (110) PV à la perovskite, lorsqu'elle est éclairée par de la lumière L, en une tension U2 de sortie pouvant être prélevée à une sortie (124) de l'électronique (120) de puissance, de manière à réduire, dans le cas défini, par adaptation d'une résistance (123) d'entrée de l'électronique (120) de puissance du dispositif (1) PV, un courant (I1) électrique se produisant pour une tension U1 de sortie de la cellule (110) PV à la perovskite.

3. Dispositif (1) PV suivant l'une des revendications 1 ou 2, **caractérisé en ce que** l'appareillage (200) de détermination de la valeur de la température T intérieure instantanée de la cellule (110) PV à la perovskite comprend
- une source (121, 121') d'énergie électrique et
- une unité (130) de commande pour faire fonctionner le dispositif PV, y compris la source (121, 121') d'énergie,
dans lequel l'unité (130) de commande est agencée,
- pour faire fonctionner la source (121, 121') d'énergie dans l'état de mesure, de manière à appliquer, pour la mesure du paramètre PARAM électrique, par une borne (115) électrique de la cellule (110) PV à la perovskite alimentée par la source (121, 121') d'énergie électrique, une tension (U_imp, U_cycl) électrique pouvant être donnée à l'avance à la cellule (110) PV à la perovskite et, en particulier, à son composant (111) sensible à la lumière,
- pour mesurer une réponse (I1) en retour de la cellule (110) PV à la perovskite à la tension (U_imp, U_cycl) appliquée,
- pour déterminer le paramètre PARAM électrique, à partir de la réponse (I1) en retour en liaison avec la tension (U_imp, U_cycl) appliquée.

4. Dispositif (1) PV suivant l'une des revendications 1 ou 2, **caractérisé en ce que** l'appareillage (200) de détermination de la valeur de la température T(t1) intérieure instantanée de la cellule (110) PV à la perovskite comprend
- une électronique (120) de puissance du dispositif (1) PV et
- une unité (130) de commande du dispositif (1) PV pour faire fonctionner le dispositif (1) PV, y compris l'électronique (120) de puissance,
dans lequel l'unité (130) de commande est agencée pour faire fonctionner l'électronique (120) de puissance dans l'état de mesure, de manière à ce que
- l'électronique (120) de puissance applique, pour la mesure du paramètre PARAM électrique par une borne (115) électrique de la cellule (110) PV à la perovskite alimentée par une source (121) d'énergie électrique intégrée à l'électronique (120) de puissance, une tension (U_imp, U_cycl) électrique pouvant être donnée à l'avance à la cellule (110) PV à la perovskite et, en particulier, à son composant (111) sensible à la lumière,
- à ce qu'une réponse (I1) en retour de la cellule PV à la perovskite à la tension (U_imp, U_cycl) appliquée puisse être mesurée,
- à ce que le paramètre PARAM électrique puisse être déterminé, à partir de la réponse (I1) en retour en liaison avec la tension (U_imp, U_cycl) appliquée.

5. Dispositif (1) PV suivant l'une des revendications 1 à 4, **caractérisé en ce que** le paramètre PARAM électrique est une impédance IMP de la cellule (110) PV à la perovskite, dans lequel l'impédance IMP(t1) mesurée représente la valeur de la température T(t1) intérieure instantanée à déterminer.

6. Dispositif (1) PV suivant l'une des revendications 1 à 5, **caractérisé en ce que** le paramètre PARAM électrique est un cyclovoltamogramme CYCL pouvant être déterminé à l'aide du procédé de la cyclovoltamétrie, en particulier un Peak I_cycl_max du cyclovoltamogramme CYCL, dans lequel le voltamogramme CYCL(t1) mesuré représente la valeur de la température T(t1) instantanée à déterminer.

7. Dispositif (1) PV suivant l'une des revendications 1 à 6, **caractérisé en ce que** l'appareillage (200) est agencé pour déterminer, sur la base d'un modèle, la valeur de la température T(t1) intérieure instantanée à partir du paramètre PARAM(t1) électrique mesuré.

8. Procédé pour faire fonctionner un dispositif (1) PV suivant la revendication 1, pour ralentir un vieillissement de la cellule (110) PV à la perovskite du dispositif (1) PV, dans lequel, dans l'état de mesure du dispositif (1) PV, on mesure le paramètre PARAM de la cellule (110) PV à la perovskite et on détermine, à partir du paramètre PARAM(t1) mesuré, la valeur de la température T(t1) intérieure instantanée de la cellule (110) PV à la perovskite, dans lequel on compare la valeur déterminée de la température T(t1) intérieure instantanée de la cellule (110) PV à la perovskite à une valeur TS de seuil, et en ce que, dans le cas défini où la valeur déterminée de la température T(t1) intérieure instantanée dépasse la valeur TS de seuil, on adapte des conditions de fonctionnement de la cellule (110) PV à la perovskite en conséquence, de manière à ce que la température T intérieure s'abaisse.

9. Procédé suivant la revendication 8, **caractérisé en ce que**, dans le cas défini, on réduit un courant (I1) se produisant à une tension U1 de sortie de la cellule (110) PV à la perovskite, en adaptant une résistance (123) d'entrée d'une électronique (120) de puissance du dispositif (1) PV.

10. Procédé suivant l'une des revendications 8 ou 9, **caractérisé en ce que**, pour la mesure du paramètre PARAM électrique, on applique une tension (U_imp, U_cycl) électrique pouvant être donnée à l'avance à la cellule (110) PV à la perovskite et, en particulier, à son composant (111) sensible à la lumière, on mesure une réponse (I1) en retour de la cellule PV à la perovskite à la tension (U_imp, U_cycl) appliquée et, à partir la réponse (I1) en retour en liaison avec la tension (U_imp, U_cycl) appliquée, on détermine le paramètre PARAM électrique.

11. Procédé suivant la revendication 10, **caractérisé en ce que** l'on utilise une électronique (120) de puissance du dispositif (1) PV pour appliquer la tension (U_imp, U-cycl) électrique pouvant être donnée à l'avance à la cellule (110) PV à la perovskite et/ou pour mesurer la réponse (I1) en retour de la cellule PV à la perovskite à la tension (U_imp, U_cycl) appliquée.

12. Procédé suivant l'une des revendications 8 à 11, **caractérisé en ce que** le paramètre PARAM électrique est une impédance IMP de la cellule (110) PV à la perovskite ou un cyclovoltamogramme CYCL pouvant être déterminé à l'aide du procédé de la cyclovoltamétrie, en particulier, un pic I_cycl_max du cyclovoltamogramme CYCL.

13. Procédé suivant l'une des revendications 8 à 12, **caractérisé en ce que** l'on détermine, sur la base d'un modèle, la température T(t1) intérieure instantanée à partir du paramètre PARAM électrique mesuré.
